Europäisches Patentamt

European Patent Office

Office européen des brevets

(11) Publication number: **0 104 056**
**A2**

# (12) EUROPEAN PATENT APPLICATION

(21) Application number: **83305413.3**

(22) Date of filing: **15.09.83**

(51) Int. Cl.³: **B 65 D 83/14**

(30) Priority: **20.09.82 US 419665**

(43) Date of publication of application:
**28.03.84 Bulletin 84/13**

(84) Designated Contracting States:
**AT BE CH DE FR GB IT LI LU NL SE**

(71) Applicant: **SEXTON CAN COMPANY, INC.**
**31 Cross Street**
**Everett Massachusetts 02149(US)**

(72) Inventor: **Mulawski, Walter J.**
**11 Nevada Drive**
**Chelmsford Massachusetts 01824(US)**

(74) Representative: **Sanders, Peter Colin Christopher et al,**
**BROOKES & MARTIN High Holborn House 52/54 High**
**Holborn**
**London WC1V 6SE(GB)**

(54) **Pressure relief device.**

(57) A container for pressurized fluids has a cylindrical side wall which is closed at one end by an internally concave bottom wall. A pressure relief device for the container comprises an externally protruding cup-shaped impression in the container bottom wall. The impression has a circular wall which is joined at one end to the container bottom wall and which is closed at the opposite end by a first base portion. A tab is located in the base portion. The tab is partially circumscribed by a line of reduced material thickness along which the base portion separates in response to over-pressurization of the container contents, thus freeing the tab for outward deflection to provide an outlet through which the contents may escape. A separate cup-shaped insert has a circular wall forcibly received within the circular wall of the cup-shaped impression. The insert is dimensioned to radially stress the base portion of the cup-shaped impression in tension.

FIG. 3

Croydon Printing Company Ltd

"PRESSURE RELIEF DEVICE"

This invention relates to pressure relief devices for internally pressurized fluid containers.

Pressurized fluid containers are in widespread use for packaging and dispensing a variety of fluid products, including liquids, gases and combinations thereof. Under normal operating conditions, such containers perform entirely satisfactorily. However, if for any reason the contents of such containers become over pressurized, for example because of improper use or exposure to heat, then violent rupture may occur. For the last 25 years, those skilled in the art have been attempting to solve this problem by incorporating various pressure release devices into the container. Examples of such devices are disclosed in U.S. Patent Nos. 2,795,350 (Lapin); 3,074,602 (Shillady et al); 3,292,826 (Ablanalp); 3,622,051 (Benson); 3,724,727 (Zundel); 3,815,534 (Kneusel); 3,826,412 (Kneusel); 3,831,822 (Zundel); and 4,003,505 (Hardt).

In each of these prior arrangements, either the container bottoms or the container side walls are scored or "coined" to provide weakened areas. These weakened areas are designed to separate and release the container contents under controlled conditions and at selected pressures beneath those at which more violent and potentially dangerous ruptures are likely to occur.

A major difficulty with these prior arrangements, however, is that relatively deep coining is often necessary to weaken a side or bottom wall sufficiently to achieve a selected release pressure. For example, consider a pressure container having a circular internally concave bottom 64.64mm. in diameter fabricated from 0.38mm. deep drawn tempered steel, the bottom being coined to provide an integral generally circular pressure release tab with a diameter of approximately 10.85mm. For the tab to release at a selected pressure which is above $1.90.10^5 Kg/m^2$ psi (minimum release pressure established by the U.S. Department of Transportation) and below a pressure at which a container wall may experience an uncontrolled violent rupture, the coining operation must be carried out to a depth of approximately 0.36mm., leaving an intact web underlying the coined indentation of only about 0.02mm. Because of the embrittlement produced by work hardening during the coining operation, such relatively thin webs are highly susceptible to damage and premature rupture during normal handling and use of the containers. Moreover, these relatively thin webs often develop microscopic cracks or fissures which allow the container contents to leak.

The present invention overcomes the problems of the prior art by providing a coined pressure release tab in the base of an externally protruding cup-shaped impression in the container bottom, and by radially prestressing the base of the cup in tension. By radially prestressing the base of the cup, the depth of the coined indentation can be significantly lessened for any selected release pressure, thus diminishing the extent to which materials are work hardened while at the same time increasing the thickness of the web at the base of the coined indentation. The coining and prestressing thus coact to provide a pressure release tab which is less likely to develop leaks. The prestressing is preferably achieved by forcibly inserting a separate element into the cup, the element having a circular wall which is received within the circular wall of the cup.

Preferably, the separate element consists of a second cup with a metering orifice in its base. The metering orifice controls the rate at which the over-pressurized contents of the container are exhausted once the release tab has opened.

In the accompanying drawings, by way of example only:-

Figure 1 is a bottom perspective view of a container with a pressure relief device embodying the present invention;
Figure 2 is a bottom plan view on an enlarged scale of the container shown in Figure 1;

Figure 3 is a sectional view on a greatly enlarged scale taken along line 3-3 of Figure 2;

Figure 4 is a view similar to Figure 3 showing the pressure relief device after the tab has opened to exhaust overpressurized fluid in the container;

Figure 5 is an enlarged somewhat schematic cross section taken through a conventional coined line; and

Figure 5A is a view similar to Figure 5 showing the coined line in a container embodying the present invention.

Referring to the drawings, a container 10 for dispensing pressurized fluids has a tubular metal side wall 12 which is stepped at the upper end as at 14 to accommodate a

conventional cap (not shown). Typically, the container will be drawn and ironed from TI tempered steel sheet stock, the side wall 12 having an I.D. of 65.33mm. and a thickness of approximately 0.305mm. A dome-shaped inwardly concave bottom wall 16 is applied to the lower end of the side wall 12 by any conventional means such as for example a double seam connection. The bottom wall typically can be drawn from TI tempered steel sheet stock.

An externally protruding cup 18 is formed as an impression in the bottom wall. The cup has a circular wall 18a having an I.D. of approximately 14.27 mm. which is joined at one end to the bottom wall 16 and which is closed at its opposite end by a base portion 18b. Preferably, the bottom wall 16 is provided with an inwardly protruding shoulder 16a at its juncture with the cup side wall 18a. Shoulder 16a serves as a reinforcement which resists outward inversion of the bottom wall as the fluid contents of the container become overpressurized. The side wall 18a meets the base portion 18b at a curved shoulder 18c having an inner radius of approximately 0.51mm.

A generally circular tab 18d is formed in the base portion 18b of the cup 18. The tab has a diameter of approximately 10.85mm. and is partially circumscribed by scored or "coined" line 18e. The depth of the coined line is approximately 0.229mm., leaving an intact underlying web 18f about 0.076mm. in thickness.

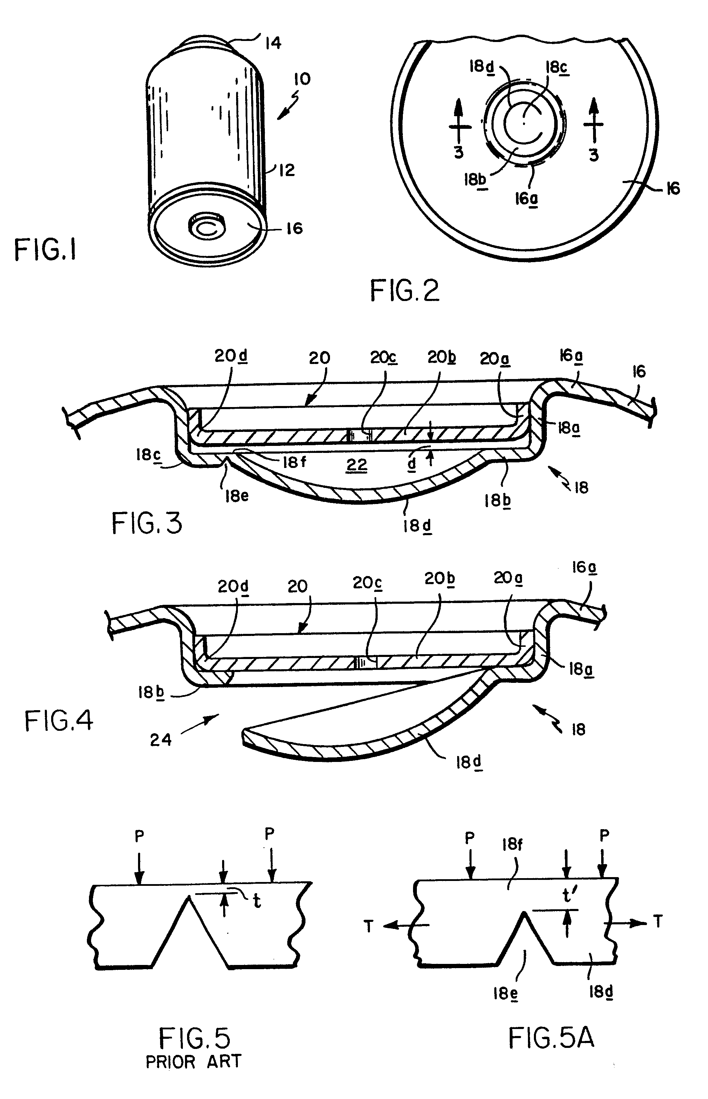

A separate cup-shaped element 20 is forcibly received in the cup 18. The cup 20 has a circular wall 20a which is open at one end and closed at the opposite end by a base portion 29b having a metering orifice 20c. The cup 20 is

typically formed from steel sheet stock 0.381mm. thick, the O.D. of the side wall 20a being approximately 14.43mm., and the diameter of the metering orifice being approximately 2.36 mm. The side wall 20a joins the base portion 20b at a curved shoulder 20d having an outer radius of about 0.889mm. When the cup 20 is seated in its operative position as shown in Figure 3, the cup base portions 18b, 20b, are spaced one from the other by a distance "d". The base portion 18b and its integral tab member 18d cooperate with the base portion 20b in defining a chamber 22. Chamber 22 communicates with the container interior via the metering orifice 20c. Thus, while the pressure release tab 18c remains intact, the fluid pressure on opposite sides of the base portion 20b in chamber 22 and the interior of the container will be equalized. The outer diameter of wall 20a with respect to the inner diameter of wall 18a is selected so that the base portion 18b is radially prestressed in tension. The line 18e is coined to a depth which weakens the material of the base portion 18b sufficientlty, given the tensile prestressing achieved by the coaction of walls 18a and 20a, so that upon overpressurization of the fluid contents of the container, say for example to $1.97 Kg/m^2$, the base portion 18b separates along line 18e and thereby allows the tab 18d to deflect outwardly as shown in Figure 4. The outward tab deflection produces an opening 24 through which the over-pressurized fluid contents of the container may escape after having first passed through the metering orifice 20c. The metering orifice reduces the rate at which the fluid contents escape, and thereby prevents the escaping contents from generating a force sufficient to propel the container. When the tab 18d opens, a momentary pressure imbalance is created between chamber 22 and the interior of the container. As shown in Figure 4, this pressure imbalance forces the inner cup 20 outwardly against the base portion 18b.

A comparison of Figures 5 and 5A illustrates some of the advantages made possible by prestressing the coined base portion 18b of the outer cup 18. In figure 5, a conventional arrangement is shown without prestressing.

With a material thickness in the range of 0.254mm. to 0.305mm., coining must be carried out to a depth around 0.229mm. to achieve release of the pressure tab when the fluid contents of the container attain pressures "P" of about $1.97Kg/m^2$. The connecting web underlying the coined line thus has a thickness "t" of only about 0.025mm.

Experience has indicated that these relatively thin webs are susceptible to being fractured during normal handling of the containers, thus resulting in the pressure tabs opening prematurely. Also, these thin webs also often have microscopic cracks which allow the container contents to seep out.

In contrast, as shown in Figure 5A, the pressure release tab 18d is defined by a much shallower coined line 18e, leaving an underlying web 18f of substantially increased thickness t' of around 0.076mm. Nevertheless, the tensile stresses T in the base portion 18b which are induced by forcibly inserting the cup 20 into the cup 18 cooperate with the same internal container pressure P to separate the first base portion at approximately the same selected pressures. The thicker web 18f is less susceptible to the development of microscopic cracks, and is more capable of withstanding damage occasioned by normal handling. The net result is a significantly lower scrap rate during container production, and a significant improvement in container reliability in the field.

## CLAIMS

1. A container for pressurized fluids, the container having a cylindrical side wall (12) which is closed at one end by an internally concave bottom wall (16) and characterised by a pressure relief device comprising: an externally protruding cup-shaped impression (18) in the bottom wall (16), the cup (18) having a circular wall (18a) joined at one end to the bottom wall (16) and closed at the opposite end by a base portion (18b); the base portion including a tab( 18d) partially circumscribed by a line (18e) of reduced material thickness such that the base portion separates along the line in response to over-pressurization of the contents of the container, thus freeing the tab for outward deflection to provide an outlet (24) through which the contents may escape; and means (20) for radially stressing the base portion (18b) of the cup in tension.

2. A container according to Claim 1 in which the means for radially stressing the base portion (18b) of the cup comprises an insert (20) having a circular wall (20a) forcibly received within the circular wall (18a) of the cup-shaped impression (18).

3. A container according to Claim 2 wherein the circular wall (20a) of the insert (20) is open at one end and closed at the opposite end by a base portion (20b) having a metering orifice (20c), the orifice being smaller than the opening created by the outward deflection of the tab.

4. A container according to any one of the preceding claims wherein the line (18e) of reduced material thickness lies on a circle having its ends separated by a connecting area of the base portion (18b) of substantially undisturbed material thickness and strength.

5. A container according to any one of the preceding claims wherein the tab (18d) is outwardly convex.

6. A container according to Claim 3 wherein the base portion (18b) of the cup (18) and the base portion (20b) of the insert (20) are mutually spaced one from the other to define a chamber (22) therebetween, the chamber communicating with the interior of the container via the metering orifice (20c).

7. A container according to any one of the preceding claims, wherein the circular wall (18a) of the cup (18) is joined to the base portion (18b) of the cup by an interiorly curved intermediate first shoulder portion (18c).

8. A container according to Claim 2 wherein upon initial separation of the base portion (18b) of the cup (18) along the said line (18e) in response to over-pressurization of the container contents, the insert (20) is forced outwardly against the base portion (18b).

9. A container for pressurised fluids, the container having an internally concave closure wall, and characterised by a pressure relief device comprising: an externally protruding impression (18) in the closure wall (16), the impression having a single weakened line (18e) of reduced material thickness partially circumscribing a tab (18d), the line (18e) being adapted to rupture in response to over-pressurization of the contents of the container, thus permitting the tab to deflect outwardly and to create an opening (24) through which the over-pressurized contents are vented to the atmosphere, and metering means (20) forcibly seated in the impression (18) for radially outwardly stressing the impression and for reducing the rate at which the contents are vented through the opening (24).

10. A container according to Claim 9 wherein the impression (18) is cup-shaped, the tab (18d) being located in a base portion (18b) of the cup.

11. A container according to Claim 10 wherein the metering means (20) comprises a separate cup-shaped element (20) nested within the cup-shaped impression (18), the element (20) having an orifice (20c) in the base portion (20b) thereof.

12. A container for pressurised fluids, the container being closed at one end by an internally concave bottom wall (16), and characterised by a pressure relief device comprising: an externally protruding cup-shaped impression (18) in the bottom wall (16), the cup having a circular side wall (18a) joined at one end to the bottom wall (16) and closed at its outer end by a circular base portion (18b); the base portion including a tab (18d) partially circumscribed by a line (18e) of reduced material thickness; and a cup-shaped insert (20) forcibly received in the cup (18), the insert having a circular wall (20a) open at one end and closed at its opposite end by a base portion (20b), the insert base portion (20b) having a metering orifice (20c) of smaller area than the tab (18d), and the circular wall (20a) of the insert (20) coacting with the circular wall (18a) of the cup-shaped impression (18) to radially prestress the base portion (18b) of the impression.

0104056

**FIG.1**

**FIG.2**

**FIG.3**

**FIG.4**

**FIG.5**
PRIOR ART

**FIG.5A**